# NEUE EUROPÄISCHE PATENTSCHRIFT

(11) **EP 1 841 268 B2**
(45) Veröffentlichungstag und Bekanntmachung des Hinweises auf die Entscheidung über den Einspruch: **25.04.2018**
(45) Hinweis auf die Patenterteilung: 17.03.2010
(21) Anmeldenummer: 07009265.5
(22) Anmeldetag: 15.02.2000
(51) Int. Cl.: H04W 72/10

(54) **Zugriff einer Mobilstation auf einen wahlfreien Zugriffskanal in Abhängigkeit ihrer Nutzerklasse**
Access of a mobile station to a random access channel in dependence of its user class
Accès d'une station mobile à un canal d'accès aléatoire en dépendance de sa classe d'utilisateur

(30) Priorität: 08.03.1999 DE 19910239
(43) Veröffentlichungstag der Anmeldung: 03.10.2007
(62) Teilanmeldung aus: 00916749.5
(73) Patentinhaber: IPCom GmbH & Co. KG, 82049 Pullach (DE)
(72) Erfinder: Fischer, Ralf, 31199 Diekholzen (DE); Hans, Martin, 31162 Bad Salzdetfurth (DE); Kowalewski, Frank, Dr., 82008 Unterhaching (DE); Laumen, Josef, 81541 München (DE); Schmidt, Gunnar, 78052 Villingen-Schwenningen (DE); Lechner, Detlef, 12101 Berlin-Tempelhof (DE); Schulz, Holger, 10587 Berlin (DE)
(74) Vertreter: Molnia, David

(56) Entgegenhaltungen:
- WO-A-91/15069
- WO-A-97/19525
- US-A- 4 707 832

## Beschreibung

Die Erfindung geht von einer Mobilstation zum Betrieb in einem UMTS-Mobilfunknetz nach der Gattung des unabhängigen Anspruchs aus.

Aus der noch nicht vorveröffentlichten deutschen Patentanmeldung mit dem Aktenzeichen 19838832.2 ist bereits ein Verfahren zur Zugriffskontrolle auf einen Telekommunikationskanal eines Telekommunikationsnetzes für mindestens eine Teilnehmerstation des Telekommunikationsnetzes bekannt, wobei Informationssignale an die mindestens eine Teilnehmerstation übertragen werden.

Aus der US 4,707,832 ist ein local area network (LAN) bekannt, das einen gemeinsamen Steuerkanal benutzt, über den Steuermeldungen zwischen Modems für jeden der Benutzerknoten eines verteilten Netzwerkes ausgetauscht werden. Zusätzlich zu dem gemeinsamen Steuerkanal ist eine Vielzahl von Datenkanalpaaren vorhanden, um Vollduplex-Verbindungen zwischen beliebigen zwei Netzwerkknoten auszuführen. Weil alle Datenkanalzuteilungen von einem erfolgreichen Gebrauch des Steuerkanals abhängen, wird ein vorgegebenes. Steuerkanalzugangsschema verwendet, um den Gebrauch des Steuerkanals für alle Nutzer des Netzwerks zu optimieren. Gemäß diesem Schema muss jeder anfordernde Knoten zuerst eine akkumulierte Aktivitätsmessung mit einer Verkehrsdichtenschwelle vergleichen, welche letztere kontinuierlich an die aktuelle Steuerkanalaktivität angepasst wird. Solange die akkumulierte Messung geringer als die Schwelle ist, wird dem anfordernden Benutzerknoten der Zugang zum Steuerkanal gesperrt.

Aus der WO 97/19525 ist ein drahtloses Kommunikationssystem bekannt, bei dem nur eine begrenzte Anzahl von Kanälen für eine Funkzelle mit einer Basisstation zur Verfügung steht.

Werden mehrere Mobilstationen auf diese Kanäle zugreifen, wird das System überlastet. Es wird daher vorgeschlagen, dass die Basisstation die Zahl der Zugriffsversuche ermittelt und Werte für die Zugriffswahrscheinlichkeiten an die einzelnen Teilnehmerstationen über einen gemeinsamen broadcast channel oder Steuerkanal überträgt. Die zugriffswillige Teilnehmerstation empfängt über diesen gemeinsamen Kanal diese Zugriffswahrscheinlichkeitswerte, wählt aus diesen Werten einen ihrer Prioritätsklasse entsprechenden aus und vergleicht ihn mit einer Zufallszahl, um festzustellen, ob der Zugriff auf einen Kommunikationskanal zulässig ist.

Gemäß WO 98/23109 wird die Steuerung des Überlastungsschutzes in einem zellularen Netzwerk mittels einer zweistufigen Adaption der Persistenz einer Mobilstation durch die Übertragung von Persistenzregeln P für die Langzeitadaption und durch die Übertragung von lastbezogenen Variablen p(i) für die kurzzeitige Adaption von der Basisstation zu der Mobilstation realisiert.

EP0765096 A2 offenbart eine Zugriffsmethode für eine Mobilstation und eine Basisstation in einem CDMA-Mobilfunksystem. Für einen Mehrfachzugriff ist ein gemeinsamer Rückkanal in einen Zugriffskanal und einen Signalisierungskanal aufgeteilt. Wenn ein zu übertragendes Datenpaket in einer Mobilstation auftritt sendet die Mobilstation mit den zu übertragenden Daten ein Übertragungsanforderungssignal einschließlich Information wie z.B. Paketgröße oder ähnlichem über den Zugriffskanal. Im Gegensatz dazu überträgt die Basisstation ein Übertragungsbewilligungssignal, welches für die Übertragung die Zeitsteuerung der Daten und einen für die Übertragung zu verwendenden Spreizcode zuweist, auf Basis des Auslastungszustandes des Signalisierungskanals und des Zustands der Häufigkeit der Daten. Die Mobilstationen übertragen Daten in Übereinstimmung mit dem Spreizcode und der Übertragungszeitsteuerung, welche von der Basisstation zugewiesen wurden.

In Tdoc SMG2 UMTS-L23 535/98 ist ein Algorithmus mit dynamischer Persistenz zwecks Interferenzverwaltung und Minimierung der Verzögerung durch die Kontrolle des Zugriffs auf den RACH-Kanal des Systems vorgeschlagen. Dabei verbreitet das System über einen gemeinsamen Downlink-Kanal einen Persistenzwert p, welcher abhängig vom geschätzten Backlog der Benutzer im System ist. Das User Equipment in einer aktiven Datensitzung liest zuerst den aktuellen Persistenzwert und überträgt ihn auf dem nächst verfügbaren RACH-Slot mit einer Wahrscheinlichkeit p. Falls ein Stau auf dem RACH im System detektiert wird, wird der Persistenzwert reduziert. Dies hat zur Folge, dass die Anzahl der aktiven Benutzer auf dem RACH reduziert wird. Hingegen wird während der inaktiven Zeitabschnitte der Persistenzwert erhöht, so dass die Zugriffsverzögerung verbessert wird.

Die erfindungsgemäße Mobil- bzw. Teilnehmerstation mit den Merkmalen der unabhängigen Ansprüche haben demgegenüber den Vorteil, dass sich eine zufällige Verteilung der Zugangsberechtigung zu diesem Telekommunikationskanal für eine oder mehrere Teilnehmerstationen realisieren lässt. Diese Zugriffskontrolle nimmt ein Minimum an Übertragungskapazität für die Übertragung der Informationssignale in Anspruch, da sie lediglich durch Übertragung des Zugriffsschwellwertes bewirkt wird.

Besonders vorteilhaft ist es, wenn in der Auswerteeinheit der mindestens einen Teilnehmerstation geprüft wird, ob die Zugriffsberechtigungsdaten Zugriffsberechtigungsinformationen mit Zugriffsklasseninformationen für mindestens eine vorgegebene Nutzerklasse umfassen, wobei in diesem Fall und unter der Voraussetzung, dass die mindestens eine Teilnehmerstation der mindestens einen vorgegebenen Nutzerklasse zugeordnet ist, der Zugriff auf einen Telekommunikationskanal der mindestens einen Teilnehmerstation in Abhängigkeit des Zugriffsklasseninformation für diese Nutzerklasse erteilt wird. Auf diese Weise können Teilnehmerstationen einer vorgegebenen Nutzerklasse selbst dann zur Nutzung des Telekommunikationskanals zugelassen werden, wenn sie aufgrund der zufälligen Verteilung mittels Zugriffsschwellwert nicht zum Zugriff auf diesen Telekommunikationskanal berechtigt wären. So können beispielsweise Teilnehmerstationen von Notdiensten, wie der Polizei oder der Feuerwehr einer solchen vorgegebenen Nutzerklasse zugeordnet sein, die dann unabhängig von der zufälligen Verteilung durch entsprechende Zugriffsschwellwertinformationen priorisiert auf den Telekommunikationskanal zugreifen können.

Ein weiterer Vorteil einer nicht in dem Anspruch beanspruchten Ausgestaltung besteht darin, daß in der Auswerteeinheit der mindestens einen Teilnehmerstation geprüft wird, ob die Zugriffsberechtigungsdaten Prioritätsinformationen in Form eines Prioritätsschwellwertes umfassen, wobei in diesem Fall und unter der Voraussetzung, daß die mindestens eine Teilnehmerstation einer Prioritätsklasse mit einem Prioritätswert zugeordnet ist, der Prioritätswert mit dem Prioritätsschwellwert verglichen wird, und der Zugriff auf einen Telekommunikationskanal der mindestens einen Teilnehmerstation in Abhängigkeit des Vergleichsergebnisses, vorzugsweise unter der Bedingung, daß der Prioritätswert größer oder gleich dem Prioritätsschwellwert ist, erteilt wird. Auf diese Weise kann unter den zufällig für den Zugriff auf diesen Telekommunikationskanal berechtigten Teilnehmerstationen zusätzlich eine weitere Auswahl getroffen werden, die Teilnehmerstationen höherer Priorität für den Zugriff auf diesen Telekommunikationskanal bevorzugt. Auch auf diese Weise können Teilnehmerstationen von Notdiensten, wie der Polizei oder der Feuerwehr priorisiert werden, allerdings in Abhängigkeit der zufälligen Verteilung mittels Zugriffsschwellwert.

Ein weiterer Vorteil einer nicht in dem Anspruch beanspruchten Ausgestaltung besteht darin, daß in der Auswerteeinheit der mindestens einen Teilnehmerstation geprüft wird, ob die Zugriffsberechtigungsdaten Teilnehmerdiensteinformationen umfassen, die für vom Telekommunikationsnetz angebotene Telekommunikationsdienste angeben, ob der Zugriff auf einen Telekommunikationskanal für die Anforderung eines solchen Telekommunikationsdienstes freigegeben ist. Für jede der nach den oben genannten Kriterien zugriffsberechtigten Nutzerklassen wird zusätzlich festgelegt, welche Telekommunikationsdienste über den Telekommunikationskanal angefordert werden können. Auf diese Weise wird wiederum Übertragungskapazität für die Übertragung der Informationssignale eingespart, da nicht von verschiedenen - nach den obigen Kriterien - zugriffsberechtigten Nutzerklassen unterschiedliche Telekommunikationsdienste angefordert werden können, sondern für jede dieser vorausgewählten Teilnehmerstationen lediglich die spezifizierten Telekommunikationsdienste über diesen Telekommunikationskanal angefordert werden können. Somit muß nur ein Minimum an Dienstinformationen mit den Informationssignalen übertragen werden.

Ein weiterer Vorteil einer nicht in dem Anspruch beanspruchten Ausgestaltung besteht darin, daß in der Auswerteeinheit der mindestens einen Teilnehmerstation geprüft wird, ob die Zugriffsberechtigungsdaten eine Auswerteinformation umfassen, die angibt, ob die Zugriffsberechtigungsdaten entweder einen Zugriffsschwellwert oder Zugriffsklasseninformationen umfassen, und daß die Zugriffsberechtigungsdaten entsprechend dem Prüfergebnis in der mindestens einen Teilnehmerstation ausgewertet werden. Auf diese Weise kann die für die Übertragung der Informationssignale erforderliche Übertragungskapazität weiter reduziert werden, in dem die Zugriffsberechtigungsinformationen entweder nur den Zugriffsschwellwert oder nur die Zugriffsklasseninformationen, jedoch nicht beides zusammen umfassen.

Ein weiterer Vorteil einer nicht in dem Anspruch beanspruchten Ausgestaltung besteht darin, daß der Zugriff auf diesen Telekommunikationskanal der mindestens einen Teilnehmerstation in Abhängigkeit des Nachrichtenverkehrsaufkommens auf mindestens einem Telekommunikationskanal freigegeben wird. Auf diese Weise läßt sich eine optimale Verteilung der Ressourcen des Telekommunikationsnetzes auf die Teilnehmerstationen bei bestmöglicher Nutzung der Übertragungskapazität erzielen.

Ausführungsbeispiele der Erfindung sind in der Zeichnung dargestellt und in der nachfolgenden Beschreibung näher erläutert. Es zeigen
Figur 1 einen Ausschnitt aus einem Telekommunikationsnetz,
Figur 2 ein Blockschaltbild einer erfindungsgemäßen Teilnehmerstation.
Figur 2a ein erstes Bitmuster für die Zuteilung des Zugriffs auf einen Telekommunikationskanal,
Figur 3b ein zweites Bitmuster für die Zuteilung des Zugriffs auf einen Telekommunikationskanal,
Figur 3c ein drittes Bitmuster für die Zuteilung des Zugriffs auf einen Telekommunikationskanal, und
Die Figuren 4a,4b und 4c einen Ablaufplan für die Funktionsweise einer Auswerteeinheit der erfindungsgemäßen Teilnehmerstation.

### Beschreibung der Ausführungsbeispiele

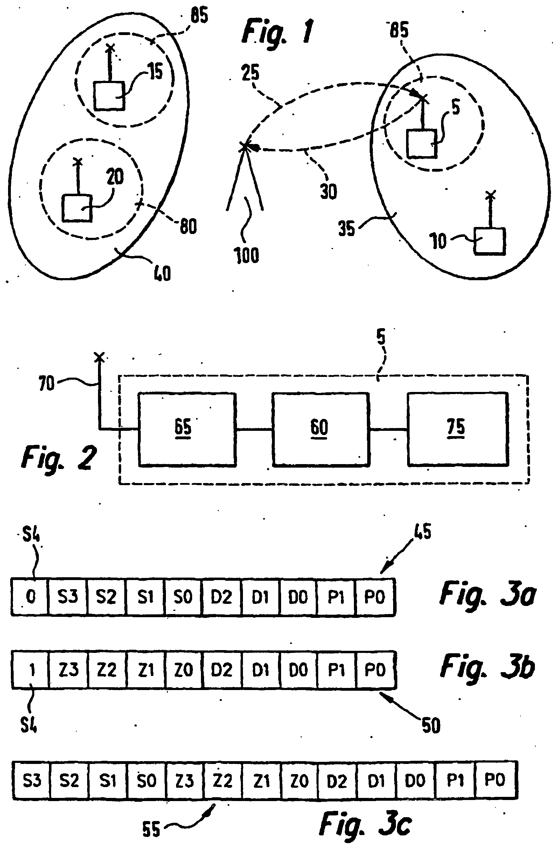

In Figur 1 kennzeichnet 100 eine Basisstation eines als Mobilfunknetz ausgebildeten Telekommunikationsnetzes. Ein solches Mobilfunknetz ist normalerweise zellular aufgebaut, wobei jede Funkzelle des Mobilfunknetzes von einer Basisstation versorgt wird. Die Basisstation 100 spannt also in Funkzelle im Mobilfunknetz auf, in der gemäß Figur 1 eine erste Teilnehmerstation 5, eine zweite Teilnehmerstation 10, eine dritte Teilnehmerstation 15 und eine vierte Teilnehmerstation 20 angeordnet sind. Bei den vier Teilnehmerstationen 5, 10, 15, 20 soll es sich beispielhaft um Mobilstationen, wie beispielsweise Mobiltelefone, Funktelefone, oder dergleichen handeln. Bei den hier beschriebenen Ausführungsbeispielen sollen also die erste Teilnehmerstation 5 als erste Mobilstation, die zweite Teilnehmerstation 10 als zweite Mobilstation, die dritte Teilnehmerstation 15 als dritte Mobilstation und die vierte Teilnehmerstation 20 als vierte Mobilstation ausgebildet sein.

Ein Netzbetreiber des Mobilfunknetzes bietet eine vorgegebene Anzahl von Telekommunikationsdiensten an. Im folgenden sollen beispielhaft drei verschiedene Telekommunikationsdienste vom Netzbetreiber angeboten werden können. Dabei kann als ein erster Telekommunikationsdienst beispielsweise ein Dienst für die Versendung kleiner Datenpakete vorgesehen sein, der von den Mobilstationen 5,10,15,20 benutzt werden kann, um kleine Datenpakete an die Basisstation 100 über einen wahlfreien Zugriffskanal 30, der im folgenden beispielhaft als RACH (Random Access Channel) ausgebildet sein soll, zu übertragen. Als ein zweiter Telekommunikationsdienst kann beispielsweise ein Dienst zum Versenden größerer Paketdaten vorgesehen sein, bei dem der RACH 30 von den Mobilstationen 5,10,15,20 benutzt werden darf, um gesonderte Datenkanäle zur Paketdatenübertragung anzufordern. Als ein dritter Telekommunikationsdienst kann beispielsweise ein Dienst zur Sprach-, bzw. leitungsgebundenen Datenübertragung vorgesehen sein, bei dem der RACH 30 von den Mobilstationen 5, 10, 15, 20 benutzt werden darf, um Sprach- und/oder Datenübertragungen einzuleiten oder fortzusetzen.

Die drei Telekommunikationsdienste können einzeln und/oder in beliebiger Kombination den Mobilstationen 5,10,15,20 vom Netzbetreiber erlaubt werden.

Die Telekommunikationsdienste müssen dabei von der entsprechenden Mobilstation über die Basisstation 100 beim Netzbetreiber angefordert werden. Die Telekommunikationsdienste werden üblicherweise über den RACH 30 von den Mobilstationen 5,10,15,20 angefordert oder zugänglich gemacht. Über den RACH 30 können in der Regel Nachrichten von mehreren Mobilstationen an die Basisstation 100 gesendet werden. Auf diese Weise können Nachrichten verschiedener Mobilstationen miteinander kollidieren. Die Basisstation 100 bestätigt daher ordnungsgemäß empfangene Nachrichten, in dem sie entsprechende Bestätigungs- oder Quittierungsinformationen auf einem anderen, in Figur 1 nicht dargestellten Kanal, beispielsweise einem Paging-Kanal, an diejenigen Mobilstationen zurücksendet, deren Nachrichten sie ordnungsgemäß empfangen hat.

Für den Fall, daß die Nachricht einer Mobilstation auf dem RACH 30 mit einer anderen Nachricht kollidiert, findet kein ordnungsgemäßer Empfang dieser Nachricht in der Basisstation 100 statt, so daß die Basisstation 100 auch keine Bestätigungsinformation an die entsprechende Mobilstation zurücksenden kann. Die Mobilstation sendet daher meist nach einer vorgegebenen Zeit, in der keine Bestätigungsinformation von der Basisstation 100 empfangen wurde, die Nachricht erneut über den RACH 30 zur Basisstation 100. Auf diese Weise droht eine Überlastung des RACH 30, der somit die benutzerinitiierte Anforderung von Telekommunikationsdiensten durch die entsprechenden Mobilstationen durch seine begrenzte Übertragungskapazität beschränkt.

Eine Überlastung des RACH 30 kann dadurch vermieden werden, daß der Netzbetreiber den Zugriff auf den RACH für die einzelnen Mobilstationen 5,10,15,20 gezielt einschränkt. Dabei kann der Zugriff auf den RACH beispielsweise nur für bestimmte Nutzerklassen von Mobilstationen vorübergehend oder dauerhaft bevorrechtigt erlaubt werden. Gemäß den beschriebenen Ausführungsbeispielen nach Figur 1 ist eine erste Nutzerklasse 35 vorgesehen, die die erste Mobilstation 5 und die zweite Mobilstation 10 umfaßt. Weiterhin ist eine zweite Nutzerklasse 40 vorgesehen, die die dritte Mobilstation 15 und die vierte Mobilstation 20 umfaßt. Es kann jedoch auch vorgesehen sein, für jede Mobilstation eine eigene Nutzerklasse vorzusehen. Es könnte auch vorgesehen sein, Nutzerklassen mit unterschiedlicher Anzahl von Mobilstationen vorzusehen. Weiterhin ist es möglich, mehr als zwei Mobilstationen in einer Nutzerklasse vorzusehen. Der Netzbetreiber kann nun den einzelnen Mobilstationen in Abhängigkeit ihrer Zugehörigkeit zu einer der beiden Nutzerklassen 35,40 der Zugriff auf den RACH freigegeben werden. Das bedeutet, daß den beiden Mobilstationen 5,10 der ersten Nutzerklasse 35 gleiche Rechte für das Senden auf dem RACH zugeteilt werden. In analoger Weise werden auch den Mobilstationen 15,20 der zweiten Nutzerklasse 40 gleiche Rechte für das Senden auf dem RACH zugeteilt.

Der Netzbetreiber informiert die einzelnen Mobilstationen 5,10,15,20 durch Informationssignale, die von der Basisstation 100 an die jeweilige Mobilstation 5,10,15,20 übertragen werden, welche Rechte für das Senden auf dem RACH der entsprechenden Mobilstation 5,10,15,20 zugeteilt sind. Dies wird stellvertretend für alle Mobilstationen 5,10,15,20 im folgenden anhand der Zuteilung der Rechte für das Senden auf dem RACH an die erste Mobilstation 5 gemäß Figur 1 beschrieben.

Dabei überträgt die Basisstation 100 zu vorgegebenen Zeiten Informationssignale an die erste Mobilstation 5. Die Informationssignale können dabei gemäß Figur 1 über einen Signalisierungskanal 25, der im folgenden beispielhaft als Broadcast Control Channel BCCH ausgebildet sein soll, übertragen werden. Dabei wird mit den Informationssignalen zu den vorgegebenen Zeiten jeweils ein Bitmuster an die erste Mobilstation 5 übertragen. Das Bitmuster kann in einer ersten Ausführungsform Informationen darüber enthalten, zu welchem Zweck und für welche Mobilstationen der Zugriff auf den RACH erlaubt ist.
Bei den möglichen Zugriffszwecken handelt es sich dabei beispielsweise um die bereits oben beschriebenen Fälle, wie das Versenden kleiner Datenpakete, die Kanalanforderung für größere Paketdaten und die Kanalanforderung für Sprach-/Datendienste.
Ein weiterer möglicher Zugriffszweck ist jedoch auch das Versenden von Signalisierungsinformationen von der Teilnehmerstation zur Basisstation, die dem Aufrechterhalten und/oder der Modifikation von bereits bestehenden Verbindungen dienen.
Da das von der Basisstation gesendete Bitmuster nicht nur zur ersten Mobilstation 5, sondern auch zu allen anderen Mobilstationen 10,15,20 ebenfalls über den Signalisierungskanal 25, der wie beschrieben als BCCH und damit als Punkt-zu-Mehrpunkt-Kanal ausgebildet ist, so daß alle Mobilstationen die gleichen Informationen zur gleichen Zeit erhalten, gesendet wird, um diesen die ihnen zugeteilten RACH-Zugriffsrechte mitzuteilen, umfaßt das Bitmuster die zugeteilten Zugriffsrechte für jede Nutzerklasse 35,40.

Eine zufällige Streuung der Zugriffsberechtigung auf den RACH 30 über einen Teil der Mobilstationen 5,10,15,20 wird erreicht, indem auf dem BCCH 25 ein Zugriffsschwellwert S gesendet wird. In Figur 2 ist beispielhaft ein Blockschaltbild der ersten Mobilstation 5 dargestellt. Die erste Mobilstation 5 umfaßt dabei eine Sende-/Emfpangseinheit 65 mit einer Sende-/Empfangsantenne 70. Die Sende-/Emfpangseinheit 65 ist außerdem an eine Auswerteeinheit 60 angeschlossen, die auf eine Zugriffsberechtigungskarte 75, beispielsweise eine SIM-Karte (Subscriber-Identity-Module) zugreift. In Figur 2 sind nur die für die Beschreibung der Erfindung erforderlichen Elemente der ersten Mobilstation 5 dargestellt. Das erfindungsgemäße Verfahren wird im folgenden beispielhaft anhand der ersten Mobilstation 5 beschrieben, wobei die zweite Mobilstation 10, die dritte Mobilstation 15 und die vierte Mobilstation 20 ebenfalls den gemäß Figur 2 beschriebenen Aufbau aufweisen. Die erste Mobilstation 5 empfängt mittels ihrer Sende-/Empfangseinheit 65 die über den BCCH 25 übertragenen Informationssignale, die den Zugriffsschwellwert S umfassen. Der Zugriffsschwellwert S wird der Auswerteeinheit 60 zugeführt. Die Auswerteeinheit 60 zieht vor jedem Zugriff der ersten Mobilstation 5 auf dem RACH 30 eine Zufalls- oder
Pseudozufallszahl R und prüft, ob die Zufalls- oder Pseudozufallszahl R mindestens so groß wie der Zugriffsschwellwert S ist. Nur dann ist ein Zugriff auf den RACH 30 erlaubt. Dabei gilt beispielsweise, daß der Zugriffsschwellwert S aus dem Intervall {0,1...*n*+1} und die Zufalls- oder Pseudozufallszahl R aus dem Intervall {0,1...*n*} ist. Dadurch kann die Nutzung des RACH 30 mit dem Zugriffsschwellwert S = n +1 für alle Mobilstationen 5,10,15,20 eingeschränkt, das heißt der Zugriff auf den RACH 30 verhindert werden. Wird die Zufalls- oder Pseudozufallszahl R mittels einer gleich verteilten Zufallsfunktion aus dem entsprechenden Intervall {0,1,...*n*} gezogen, so ist die Wahrscheinlichkeit zum Zugriff auf den RACH 30 für alle Mobilstationen 5,10,15,20 gleich.

Im folgenden wird anhand der Figuren 3a und 3b ein erstes Ausführungsbeispiel beschrieben. Zugriffsberechtigungsdaten 45, 50, 55 sind im ersten Ausführungsbeispiel und den weiteren Ausführungsbeispielen als Bitmuster ausgeführt, wobei die Zugriffsberechtigungsdaten 45, 50, 55 mit den Informationssignalen an die Mobilstationen 5, 10, 15, 20 übertragen werden und wobei die Zugriffsberechtigungsdaten 45, 50, 55 die Informationen über die Rechte zur Nutzung des RACH 30 umfassen. Im ersten Ausführungsbeispiel werden an jede Mobilstation 5, 10, 15, 20 Informationssignale übertragen, die jeweils ein Bitmuster, bestehend aus 10 Bits, umfassen. Dabei ist ein erstes Bit ein Auswertebit S4. Die Figur 3a zeigt den Fall, in dem das Auswertebit S4 = 0 ist. Das zweite Bit ist dann ein erstes Zugriffsschwellwert-Bit S3, daß dritte Bit ein zweites Zugriffsschwellwert-Bit S2, daß vierte Bit ein drittes Zugriffsschwellwert-Bit S1 und das fünfte Bit ein viertes Zugriffsschwellwert-Bit S0. Mit den vier Zugriffsschwellwert-Bits S3, S2, S1, S0 lassen sich an diesem Beispiel 2⁴ = 16 Zugriffsschwellwerte S vom Netzbetreiber an die Mobilstationen 5,10,15,20 übertragen, wobei über den BCCH 25 zu allen Mobilstationen 5,10,15,20 der gleiche Zugriffsschwellwert S übertragen wird. Je nach dem aktuellen Nachrichtenverkehrsaufkommen im Telekommunikationsnetz kann der Zugriffsschwellwert S dabei größer oder kleiner eingestellt, daß heißt verändert bzw. angepaßt werden. Bei 16 möglichen Zugriffsschwellwerten S können maximal 16 Zugriffsklassen für die Mobilstationen 5,10,15,20 gebündelt werden, wobei die Zugehörigkeit einer Mobilstation 5,10,15,20 zu einer der 16 Zugriffsklassen vom Ziehen einer von 16 Zufalls- oder Pseudozufallszahlen R in der jeweiligen Auswerteeinheit der Mobilstation 5,10,15,20 abhängt und sich somit bei jedem neuen Ziehvorgang ändern kann. Das sechste Bit im ersten Bitmuster 45 ist ein erstes Telekommunikationsdienst-Bit D2, das siebte Bit ist ein zweites Telekommunikationsdienst-Bit D1 und das achte Bit ist ein drittes Telekommunikationsdienst-Bit D0. Das erste Telekommunikationsdienst-Bit D2 gibt an, ob der erste Telekommunikationsdienst genutzt werden kann, das zweite Telekommunikationsdienst-Bit D1 gibt an, ob der zweite Telekommunikationsdienst genutzt werden kann und das dritte Telekommunikationsdienst-Bit D0 gibt an, ob der dritte Telekommunikationsdienst genutzt werden kann. Es kann vereinbart werden, das ein Telekommunikationsdienst dann nutzbar ist, wenn das zugehörige Telekommunikationsdienst-Bit gesetzt ist.

Die Mobilstationen 5,10,15,20 können zusätzlich in sogenannte Prioritätsklassen 80,85 eingeteilt sein. Gemäß Figur 1 ist die vierte Mobilstation 20 in eine erste Prioritätsklasse 80 eingeteilt. Die erste Mobilstation 5 und die dritte Mobilstation 15 sind gemäß Figur 1 in eine zweite Prioritätsklasse 85 eingeteilt. Die zweite Mobilstation 10 ist gemäß Figur 1 in keine Prioritätsklasse eingeteilt. Das neunte Bit des ersten Bitmusters 45 ist ein erstes Prioritätsbit P1 und das zehnte Bit des ersten Bitmusters 45 ist ein zweites Prioritätsbit P0. Somit kann über das erste Bitmuster 45 ein Prioritätsschwellwert P mit vier verschiedene Werten zu den Mobilstationen 5,10,15,20 übertragen werden. Es sind daher maximal vier Prioritätsklassen mit jeweils unterschiedlicher Priorität durch den Prioritätsschwellwert P unterscheidbar. Gemäß Figur 1 sind nur zwei der gemäß Figur 3a möglichen vier Prioritätsklassen dargestellt. So könnte beispielsweise die erste Prioritätsklasse 80 eine Prioritätsklasse für Notdienste wie beispielsweise der Polizei oder der Feuerwehr mit dem höchsten Prioritätswert 4 darstellen. Die zweite Prioritätsklasse 85 könnte beispielsweise eine Prioritätsklasse für einen städtischen Energieversorger mit einem etwas niedrigeren Prioritätswert 3 darstellen. Falls eine Mobilstation 5,10,15,20 zu einer Prioritätsklasse gehört, so ist der zugehörige Prioritätswert auf der Zugangsberechtigungskarte 75 abgelegt und kann dort von der Auswerteeinheit 60 ermittelt werden. Von den Mobilstationen 5,10,15,20, die eine Zufalls- oder Pseudozufallszahl R größer oder gleich den Zugriffsschwellwert S ziehen, erhalten dann nur diejenigen Zugriffsberechtigung auf den RACH 30, deren Prioritätswert auch größer oder gleich dem Prioritätsschwellwert P ist. Im Falle der zweiten Mobilstation 10, die keiner Prioritätsklasse zugeordnet ist, kann dabei vorgesehen sein, daß ihre Auswerteeinheit einen Zufalls- oder Pseudozufallsprioritätswert aus den vier möglichen Prioritätswerten zieht und den gezogenen Prioritätswert mit den übertragenen Prioritätsschwellwert P vergleicht und die Zugriffsberechtigung für den RACH 30 erhält, wenn der gezogene Zufalls- oder Pseudozufallsprioritätswert größer oder gleich dem Prioritätsschwellwert P ist. Vorausgesetzt ist dabei, daß auch die von der Auswerteeinheit der zweiten Mobilstation 10 gezogenen Zufalls- oder Pseudozufallszahl R größer oder gleich dem Zugriffsschwellwert S ist. Es kann jedoch auch vorgesehen sein, daß die Mobilstationen, die keiner Prioritätsklasse angehören, keinen Vergleich mit dem Prioritätsschwellwert P durchführen müssen, sondern lediglich eine Zufalls- oder Pseudozufallszahl R ziehen müssen, die größer oder gleich dem Zugriffsschwellwert S ist, um auf den RACH 30 zugreifen zu dürfen. Eine Mobilstation ist dann keiner Prioritätsklasse zugeordnet, wenn auf der eingeschobenen Zugangsberechtigungskarte 75 kein Prioritätswert abgelegt ist.
Es kann auch vorgesehen sein, daß in einem Speicher der Auswerteeinheit ein vorgegebener Prioritätswert abgespeichert ist, der einem der vier möglichen Prioritätswerte entspricht. Für den Fall, daß die Auswerteeinheit 60 auf der Zugangsberechtigungskarte 75 keinen Prioritätswert ermittelt, kann sie den vorgegebenen Prioritätswert zum Vergleich mit dem Prioritätsschwellwert P in der beschriebenen Weise verwenden.

In Figur 3b ist ein zweites Bitmuster 50 mit ebenfalls einer Bitlänge von 10 Bit dargestellt, wobei der Aufbau des zweiten Bitmuster 50 dem Aufbau des ersten Bitmusters 45 entspricht mit Ausnahme der Tatsache, daß das Auswertebit S4 auf 1 gesetzt ist und daher das zweite Bit, das dritte Bit, das vierte Bit und das fünfte Bit des zweiten Bitmusters 50 nicht mehr als Schwellwertbits sondern als Zugriffsklassenbits definiert sind. So ist das zweite Bit des zweiten Bitmusters 50 ein erstes Zugriffsklassenbit Z3, das dritte Bit des zweiten Bitmusters 50 ein zweites Zugriffsklassenbit Z2, das vierte Bit des zweiten Bitmusters 50 ein drittes Zugriffsklassenbit Z1 und das fünfte Bit des zweiten Bitmusters 50 ein viertes Zugriffsklassenbit Z0. Das erste Zugriffsklassenbit Z3 steht für die erste Nutzerklasse 35, das zweite Zugriffsklassenbit Z2 steht für die zweite Nutzerklasse 40, das dritte Zugriffsklassenbit Z1 steht für eine dritte, in Figur 1 nicht dargestellte Nutzerklasse und das vierte Zugriffsklassenbit Z0 steht für eine vierte in Figur 1 ebenfalls nicht dargestellt Nutzerklasse. Die Zugriffsklassenbits werden in ihrer Gesamtheit auch als Zugriffsklasseninformationen bezeichnet.
Gemäß Figur 1 sind alle Mobilstationen 5,10,15,20 der ersten Nutzerklasse 35 oder der zweiten Nutzerklasse 40 zugeordnet. Weitere, in Figur 1 nicht dargestellte Mobilstationen können ebenfalls der ersten Nutzerklasse 35 oder der zweiten Nutzerklasse 40 zugeordnet sein. Sie können aber auch der dritten Nutzerklasse oder der vierten Nutzerklasse oder gar keiner Nutzerklasse zugeordnet sein. Wenn ein Zugriffsklassenbit im zweiten Bitmuster 50 den Wert 0 hat, daß heißt nicht gesetzt ist, so dürfen alle Mobilstationen der zugeordneten Nutzerklasse auf den RACH 30 zugreifen.

Wenn ein Zugriffsklassenbit des zweiten Bitmusters 50 auf 1 gesetzt ist, so darf keine Mobilstation der zugeordneten Nutzerklasse auf den RACH 30 zugreifen.

Alle Mobilstationen, die auf den RACH 30 zugreifen dürfen, können diejenigen Telekommunikationsdienste nutzen, deren zugeordnete Telekommunikationsdienstbits im ersten Bitmuster 45 bzw. im zweiten Bitmuster 50 gesetzt sind.

Es kann auch vorgesehen sein, daß in einem Speicher der Auswerteeinheit ein vorgegebener Prioritätswert abgespeichert ist, der einem der vier möglichen Prioritätswerte entspricht. Für den Fall, daß die Auswerteeinheit 60 auf die Zugangsberechtigungskarte 75 keinen Prioritätswert ermittelt, kann sie den vorgegebenen Prioritätswert zum Vergleich mit dem Prioritätsschwellwert P in der beschriebenen Weise verwenden.

Die Zugehörigkeit zu einer Nutzerklasse entnimmt die Auswerteeinheit der entsprechenden Mobilstation ebenfalls von der Zugangsberechtigungskarte 75. Ist dort keine Nutzerklasse gespeichert, so erkennt die Auswerteeinheit der entsprechenden Mobilstation, daß diese keiner Nutzerklasse angehört.

Wenn das Auswertebit S4 auf 1 gesetzt ist, ist kein Zugriff von Mobilstationen auf den RACH 30 möglich, die keiner Nutzerklasse angehören.

Im folgenden wird am Beispiel für ein mit dem Informationssignal übertragenes Bitmuster der Bitlänge von 10 Bit beschrieben. Bei diesem Beispiel wird die Bitfolge "auf 0 1000 011 01" an die Mobilstationen 5,10,15,20 von der Basisstation 100 über den BCCH 25 gesendet. Das bedeutet, daß die Mobilstationen, die einer Nutzerklasse zugeordnet sind, wie Mobilstationen behandelt werden, die keiner Nutzerklasse zugeordnet sind, da das Auswertebit S4 nicht gesetzt ist. Durch die Zugriffsschwellwert-Bits S3, S2, S1, S0 wird der Zugriffsschwellwert S binär kodiert und durch die Prioritätsbits P1, P0 wird der Prioritätsschwellwert P binär kodiert. Für den Zugriffsschwellwert S ergibt sich somit ein Wert von 8 und für den Prioritätsschwellwert P ein Wert von 1. Ist eine Mobilstation nach Auswertung von P und S zugriffsberechtigt, so darf sie den RACH jedoch lediglich zur Kanalanforderung für größere Paketdatendienste und für Sprach-/Datendienste nutzen. Aufgrund der obigen Einstellung für die Dienstinformation ist es solchen Mobilstationen NICHT erlaubt, den RACH für die Versendung kleiner Datenpakete zu nutzen.
Das zweite, dritte, vierte und fünfte Bit des ersten Bitmusters 45 bzw. des zweiten Bitmusters 50 stellen Zugriffsberechtigungsinformationen dar, die beim ersten Bitmuster 45 den Zugriffsschwellwert S und beim zweiten Bitmuster 50 die Zugangsberechtigung für die vier Nutzerklassen angeben. Das erste Bit bestimmt dabei, ob das zweite bis fünfte Bit gemäß dem ersten Bitmuster 45 oder gemäß dem zweiten Bitmuster 50 interpretiert wird.

In einem zweiten Ausführungsbeispiel, dem die in den Ansprüchen definierte Erfindung zugrunde liegt, wird in Fig 3c ein drittes Bitmuster 55 mit den Informationssignalen von der Basisstation 100 zu den Mobilstationen 5,10,15,20 übertragen, daß eine Bitlänge von 13 Bit aufweist. Das dritte Bitmuster 55 weist kein Auswertebit S4 auf und umfaßt daher sowohl die Zugriffsschwellwert-Bits S3,S2,S1,S0 als auch die Zugriffsklassenbits Z3,Z2,Z1,Z0. Zusätzlich umfaßt das dritte Bitmuster 55 wie auch das erste Bitmuster 45 und das zweite Bitmuster 50 die Telekommunikationsdienstbits D2,D1,D0 und die Prioritätsbits P1,P0. Mobilstationen, die einer Nutzerklasse angehören, für die das zugehörigen Zugriffsklassenbit = 0 ist, können unabhängig vom Zugriffsschwellwert S und vom Prioritätsschwellwert P und damit ggf. ohne deren Auswertung in der Auswerteeinheit 60 auf den RACH 30 zugreifen. Mobilstationen, die einer Nutzerklasse angehören, deren zugeordnetes Zugriffsklassenbit auf 1 gesetzt ist, sowie Mobilstationen, die keiner Nutzerklasse angehören, müssen zur Ermittlung ihrer Zugriffsberechtigung auf den RACH 30 die bereits im ersten Ausführungsbeispiel beschriebenen Zugriffsschwellwert - und ggf. zusätzlich die im ersten Ausführungsbeispiel beschriebenen Prioritätsschwellwertauswertung durchführen. Als Beispiel wird die folgende Bitfolge betrachtet: "1000 0110 011 01". Dies bedeutet, daß eine Zugriffsschwelle S = 8 gewählt wurde, daß die Mobilstationen der ersten Nutzerklasse 35 und der vierten, in Figur 1 nicht dargestellten Nutzerklasse unabhängig von einer Auswertung des Zugriffsschwellwertes S und ggf. des Prioritätsschwellwertes P auf den RACH 30 zugreifen dürfen, daß die Mobilstationen der zweiten Nutzerklasse 40 und der in Figur 1 nicht dargestellten dritten Nutzerklasse nicht ohne Auswertung des Zugriffsschwellwertes S und ggf. des Prioritätsschwellwertes auf den RACH 30 zugreifen dürfen. Für den Prioritätsschwellwert P ergibt sich ein Wert von 1. Die zugriffsberechtigten Mobilstationen dürfen den RACH nicht zur Versendung kleiner Datenpakte nutzen, jedoch dürfen sie auf dem RACH Kanalanforderungen für größere Paketdatendienste und Sprach-/Datendienste senden. Im Gegensatz zum ersten Ausführungsbeispiel ist es beim zweiten Ausführungsbeispiel möglich, daß neben Mobilstationen, die aufgrund ihrer Zugehörigkeit zu einer Nutzerklasse auf den RACH 30 zugreifen dürfen, auch solche Mobilstationen auf den RACH 30 zugreifen dürfen, die eine Zufalls- oder Pseudozufallszahl R größer gleich dem Zugriffsschwellwert S ziehen und ggf. einen Prioritätswert oberhalb des Prioritätsschwellwertes P aufweisen.

Im Vergleich zum ersten Bitmuster und zum zweiten Bitmuster enthalten beim dritten Bitmuster die Zugriffsberechtigungsinformationen sowohl die Zugriffsschwellwertbits S3, S2, S1, S0 als auch die Zugriffsklassenbits Z3, Z2, Z1, Z0.

Die im ersten, zweiten und dritten Bitmuster 45, 50 ,55 verwendeten Anzahlen von Bits für den Zugriffssschwellwert S, die Zugriffsklasseninformation Z0, Z1, Z2, Z3, den Prioritätsschwellwert P und die Teilnehmerdiensteinformationen D0, D1, D2 sind lediglich beispielhaft zu verstehen und können, beispielsweise zum umfangreicheren Signalisieren erhöht und zur Bandbreitenreduktion verringert werden. In diesem Fall ändert sich gegebenenfalls auch die Gesamtlänge der Bitmuster 45, 50, 55. Gegebenenfalls können einzelne der Informationskomponenten auch gänzlich ausgelassen werden.

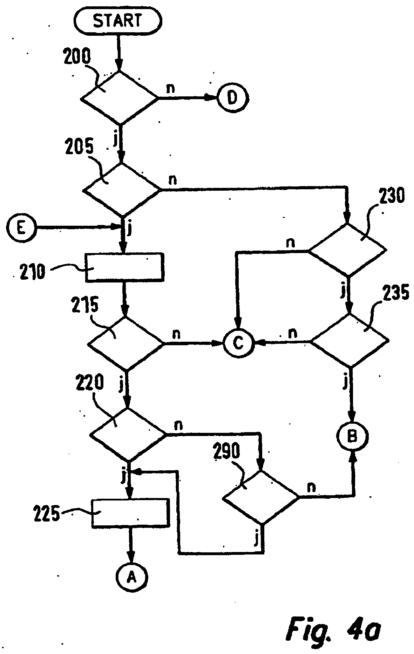

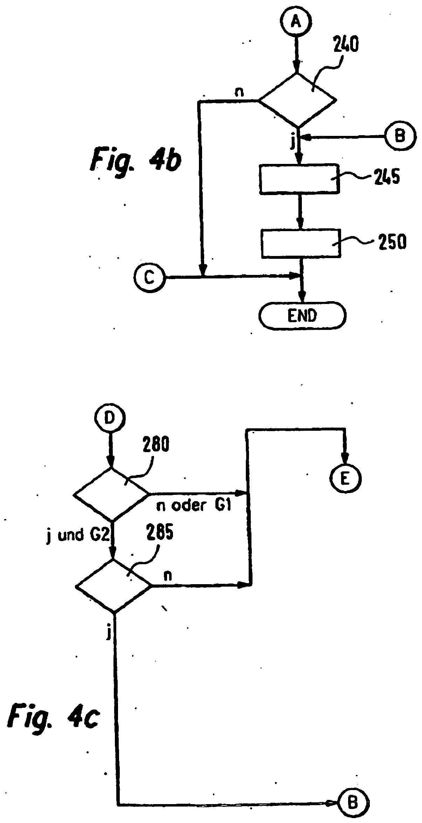

In den Figuren 4a, 4b und 4c ist ein Ablaufplan für die Funktionsweise der Auswerteeinheit 60 dargestellt. Bei einem Programmpunkt 200 prüft die Auswerteeinheit 60, ob die über den BCCH 25 empfangenen Informationssignale ein Bitmuster der Bitlänge von 10 Bit umfassen. Ist dies der Fall, so wird zu einem Programmpunkt 205 verzweigt, andernfalls wird zu einem Programmpunkt 280 verzweigt. Beim Programmpunkt 205 prüft die Auswerteeinheit 60, ob das Auswertebit S4 = 0 ist. Ist dies der Fall, so wird zu einem Programmpunkt 210 verzweigt, andernfalls wird zu einem Programmpunkt 230 verzweigt. Bei Programmpunkt 210 ermittelt die Auswerteeinheit 60 aus den Zugriffsschwellwertbits S3, S2, S1, S0 den Zugriffsschwellwert S und zieht eine Zufalls- oder Pseudozufallszahl R aus der Menge der möglichen Zugriffsschwellwerte S, wobei der größtmögliche Zugriffsschwellwert S für das Ziehen der Zufalls- oder Pseudozufallszahl R ausgenommen sein kann. Anschließend wird zu einem Programmpunkt 215 verzweigt. Bei Programmpunkt 215 prüft die Auswerteeinheit 60, ob die Zufalls- oder Pseudozufallszahl R größer oder gleich dem Zugriffsschwellwert S ist. Ist dies der Fall, so wird zu einem Programmpunkt 220 verzweigt, andernfalls wird das Programm verlassen. Bei Programmpunkt 220 prüft die Auswerteeinheit 60, ob auf der Zugangsberechtigungskarte 75 ein Prioritätswert einer zugehörigen Prioritätsklasse gespeichert ist. Ist dies der Fall, so wird zu einem Programmpunkt 225 verzweigt, andernfalls wird zu einem Programmpunkt 290 verzweigt. Bei Programmpunkt 290 prüft die Auswerteeinheit 60, ob in einem ihr zugeordneten Speicher ein vorgegebener Prioritätswert abgelegt ist. Ist dies der fall, so wird zum Programmpunkt 225 verzweigt, andernfalls wird zu einem Programmpunkt 245 verzweigt. Bei Programmpunkt 225 ermittelt die Auswerteeinheit 60 aus dem empfangenen Bitmuster den Prioritätsschwellwert P. Anschließend wird zu einem Programmpunkt 240 verzweigt. Bei Programmpunkt 240 prüft die Auswerteeinheit 60, ob der Prioritätswert größer oder gleich der Prioritätsschwelle P ist. Ist dies der Fall, so wird zum Programmpunkt 245 verzweigt, andernfalls wird das Programm verlassen. Bei Programmpunkt 245 ermittelt die Auswerteeinheit 60 aus dem Bitmuster anhand der Telekommunikationsdienstbits die nutzbaren Telekommunikationsdienste. Anschließend wird zu einem Programmpunkt 250 verzweigt. Bei Programmpunkt 250 gibt die Auswerteeinheit 60 den Zugriff der zugehörigen Mobilstation auf den RACH 30 zur Nutzung der nutzbaren Telekommunikationsdienst frei. Anschließend wird das Programm verlassen. Bei Programmpunkt 230 prüft die Auswerteeinheit 60, ob auf der Zugangsberechtigungskarte 75 die Zugehörigkeit zu einer Nutzerklasse gespeichert ist. Ist dies der Fall, so wird zu einem Programmpunkt 235 verzweigt, andernfalls wird das Programm verlassen. Bei Programmpunkt 235 prüft die Auswerteeinheit 60 anhand der Zugriffsklassenbits, ob die anhand der Zugangsberechtigungskarte 75 ermittelte Nutzerklasse der Mobilstation für den Zugriff auf den RACH 30 zulässig ist. Ist dies der Fall, so wird zu Programmpunkt 245 verzweigt, andernfalls wird das Programm verlassen. Bei Programmpunkt 280 hat die Auswerteeinheit 60 erkannt, daß ein Bitmuster mit der Bitlänge von 13 Bit empfangen wurde und prüft, ob auf der Zugangsberechtigungskarte 75 eine Zugehörigkeit der zugehörigen Mobilstation zu einer Nutzerklasse gespeichert ist. Weiterhin wird bei Programmpunkt 280 geprüft, ob die Nutzerklasse zu einer ersten Gruppe von Nutzerklassen oder zu einer zweiten Gruppe von Nutzerklassen gehört. Die erste Gruppe von Nutzerklassen wird im folgenden auch als normalprivilegiert bezeichnet. Die zweite Gruppe von Nutzerklassen wird im folgenden auch als bevorrechtigt bezeichnet. Falls bei Programmpunkt 280 erkannt wird, daß auf der Zugangsberechtigungkarte 75 eine Zugehörigkeit der zugehörigen Mobilstation zu der bevorrechtigten Nutzerklasse besteht, so verzweigt das Programm zu Programmpunkt 285. Andernfalls, d.h. falls auf der Zugangsberechtigungskarte 75 keine Zugehörigkeit der Mobilstation zu einer Nutzerklasse erkannt wird oder wenn die normalprivilegierte Nutzerklasse erkannt wird, so verzweigt das Programm zu Programmpunkt 210. Ist dies der Fall, so wird zu einem Programmpunkt 285 verzweigt, andernfalls wird zu einem Programmpunkt 210 verzweigt. Bei Programmpunkt 285 prüft die Auswerteeinheit 60 anhand der Zugriffsklassenbits bei Z3, Z2, Z1, Z0 des empfangenen Bitmusters ob die für die Mobilstation ermittelte Nutzerklasse für den Zugriff auf den RACH 30 berechtigt ist. Ist dies der Fall, so wird zu Programmpunkt 245 verzweigt, andernfalls wird zu Programmpunkt 210 verzweigt.
In allen Fällen, in denen das Programm nicht ausgehend vom Programmpunkt 250 verlassen wird, wird von der Auswerteeinheit 60 keine Zugriffserlaubnis auf den RACH 30 für die zugeordnete Mobilstation 5 ermittelt. Nach der Beendigung des Programms teilt die Mobilstation dem Benutzer mit, daß der Zugriff auf den RACH 30 nicht möglich war und erwartet weitere Eingaben des Benutzers. Alternativ dazu wird durch eine in der Mobilstation realisierte Warteschleife das Programm neu durchlaufen, so daß das nachfolgende Informationssignal mit dem nachfolgenden Bitmuster abgewartet und zur Ermittlung der Zugangsberechtigung auf den RACH 30 ausgewertet wird.

Die Informationssignale werden von der Basisstation 100 zu der Mobilstation 5,10,15,20 zu vorgegebenen Zeiten, vorzugsweise in regelmäßigen Abständen übertragen. Der Netzbetreiber kann den Zugriff auf den RACH in Abhängigkeit des Nachrichtenverkehrsaufkommens im Telekommunikationsnetz und damit in Abhängigkeit einer erwarteten Auslastung des RACH 30 für die einzelnen Mobilstationen 5,10,15,20 gemäß dem beschriebenen Verfahren erlauben oder sperren. Da sich das Nachrichtenverkehrsaufkommen im Telekommunikationsnetz mit der Zeit verändert, ändert sich auch die erwartete Auslastung des RACH 30 mit der Zeit, so daß Zugriff auf den RACH in der Regel zu verschiedenen Zeiten mittels entsprechend veränderter Bitmusterbelegung den verschiedenen Mobilstationen 5,10,15,20 zugeteilt wird.
Eine Entlastung des RACH 30 kann zusätzlich dadurch erzielt werden, daß ein Wiederholungszähler und/oder ein Wiederholungsabstand vorgesehen ist. Der Wiederholungszähler gibt die maximale Anzahl der erlaubten Wiederholversuche für ein wiederholtes Absenden einer Nachricht von der entsprechenden Mobilstation über den RACH 30 an die Basisstation 100 für den Fall der Kollision mit einer Nachricht einer anderen Mobilstation an. Der Wiederholungsabstand ist ein stochastisches Maß für den zeitlichen Abstand bis zur nächsten Wiederholung der von der jeweiligen Mobilstation an die Basisstation 100 über den RACH 30 gesendeten Nachricht. Je kleiner die Anzahl der erlaubten Wiederholversuche und je größer der Wiederholungsabstand, desto größer die Entlastung des RACH 30. Der Wiederholungszähler und/oder der Wiederholungsabstand kann in regelmäßigen Zeitabständen zusammen mit dem Bitmuster der zugeteilten Zugriffsrechte den entsprechenden Mobilstationen gegebenenfalls zusammen mit weiteren funkzellenspezifischen Informationen auf dem zugehörigen Signalisierungskanal 25 mitgeteilt werden.
Die erfindungsgemäße Vorrichtung kann in einem Mobilfunknetz nach UMTS-Standard (Universal Mobile Telecommunication System), nach GSM-Standard, oder dergleichen realisiert werden.

Die erfindungsgemäße Vorrichtung ist nicht auf die Anwendung in einem Mobilfunknetz beschränkt, sondern generell in Telekommunikationsnetzen anwendbar, in denen ein Telekommunikationskanal existiert, welcher zur Anforderung von Telekommunikationsdiensten und/oder zum Versenden von Datenpaketen von mehreren Teilnehmerstationen benutzt wird, wobei das Telekommunikationsnetz beispielsweise auch ein drahtgebundenes Festnetz sein kann.

In einer anderen Ausführungsform kann es auch vorgesehen sein, daß für eine Zugangsberechtigung eine Zufallszahl oder Pseudozufallszahl R kleiner als der Zugriffsschwellwert S vorausgesetzt wird. Entsprechend kann auch für die Prioritätsprüfung mittels des Prioritätsschwellwertes P vorausgesetzt werden, daß die Zufallszahl oder die Pseudozufallszahl R kleiner als der Prioritätsschwellwert P ist.

## Patentansprüche

1. Mobilstation (5,10, 15, 20) zum Betrieb in einem UMTS Mobilfunknetz, in dem mehrere Nutzerklassen (35, 40) unterschieden werden, in dem lnformationssignale mit Zugriffsberechtigungsdaten an die Mobilstation übertragen werden, wobei die Zugriffsberechtigungsdaten als ein Bitmuster übertragen werden,
***dadurch gekennzeichnet, dass***
die Mobilstation (5,10, 15, 20) dazu eingerichtet ist,
eine Nutzerklasse (35, 40) von einer SIM-Karte (75) zu lesen,
über einen Broadcast Control Channel (25) die Zugriffsberechtigungsdaten, welche Zugriffsschwellwertbits (S3, S2, S1, S0) und Zugriffsklassenbits (Z0, Z1, Z2, Z3) aufweisen, zu empfangen,
aus den Zugriffsschwellwertbits (S3, S2, S1, S0) einen Zugriffsschwellwert (S) zu ermitteln, sofern die Zugriffsberechtigung auf den wahlfreien Zugriffskanal in Abhängigkeit einer Zugriffsschwellwertauswertung ermittelt wird,
anhand des für die Nutzerklasse (35, 40) relevanten Zugriffsklassenbits (Z0, Z1, Z2, Z3) zu ermitteln,
ob die Mobilstation (5,10, 15, 20) unabhängig von den empfangenen Zugriffsschwellwertbits (S3, S2, S1, S0) auf einen wahlfreien Zugriffskanal, zum Beispiel RACH, zugreifen darf,
oder ob die Zugriffsberechtigung auf den wahlfreien Zugriffskanal, zum Beispiel RACH, in Abhängigkeit einer Zugriffsschwellwertauswertung zu ermitteln ist,
und dazu eingerichtet ist, als Zugriffsschwellwertauswertung den Zugriffsschwellwert (S) mit einer Zufallszahl oder einer Pseudozufallszahl (R) zu vergleichen,
und dazu eingerichtet ist, auf den wahlfreien Zugriffskanal in Abhängigkeit der Ermittlung anhand des Zugriffsklassenbits entweder unabhängig von den empfangenen Zugriffsschwellwertbits (S3, S2, S1, S0) oder in Abhängigkeit des Vergleichsergebnisses zuzugreifen.

## Claims

1. Mobile station (5, 10, 15, 20) for operation in a UMTS mobile radio network in which multiple user classes (35, 40) are distinguished, in which information signals with access authorization data are transmitted to the mobile station, wherein the access authorization data are transmitted as a bit pattern,
**characterized in that**
the mobile station (5, 10, 15, 20) is arranged
to read a user class (35, 40) from a SIM card (75),
to receive the access authorization data, which have access threshold value bits (S3, S2, S1, S0) and access class bits (Z0, Z1, Z2, Z3) over a broadcast control channel (25),
to determine an access threshold value (S) from the access threshold value bits (S3, S2, S1, S0), if the access authorization for the random access channel is determined on the basis of an access threshold value evaluation,
by means of the access class bit (Z0, Z1, Z2, Z3) relevant for the user class (35, 40) to determine
whether the mobile station (5, 10, 15, 20) is permitted to access a random access channel, for example RACH, independent of the received access threshold value bits (S3, S2, S1, S0),
or whether the access authorization for the random access channel, for example RACH, is to be determined on the basis of an evaluation of the access threshold value,
and is arranged to compare the access threshold value (S) with a random number or a pseudo random number (R) as the access threshold value evaluation,
and is arranged to access the random access channel dependent on the determination using the access class bit, either independent of the received access threshold value bits (S3, S2, S1, S0) or dependent on the result of the comparison.

## Revendications

1. Station mobile (5, 10, 15, 20) destinée à être utilisée dans un réseau de radiocommunication mobile UMTS au sein duquel sont distinguées plusieurs classes d'utilisateur (35, 40), dans lequel des signaux d'information comportant des données d'autorisation d'accès sont transmis à la station mobile, les données d'autorisation d'accès étant transmises comme un motif de bits,
**caractérisée en ce que**
la station mobile (5, 10, 15, 20) est conçue pour
lire une classe d'utilisateur (35, 40) à partir d'une carte SIM (75),
recevoir les données d'autorisation d'accès, lesquelles contiennent des bits de seuil d'accès (S3, S2, S1, S0) et des bits de classe d'accès (Z0, Z1, Z2, Z3) par le biais d'un canal de commande de diffusion (25),
déterminer un seuil d'accès (S) à partir des bits de seuil d'accès (S3, S2, S1, S0), sous réserve que l'autorisation d'accès au canal d'accès aléatoire soit déterminée en fonction d'une interprétation de seuil d'accès,
déterminer, à l'aide des bits de classe d'accès (Z0, Z1, Z2, Z3) qui concernent la classe d'utilisateur (35, 40),
si la station mobile (5, 10, 15, 20) est autorisée à accéder à un canal d'accès aléatoire, par exemple RACH, indépendamment des bits de valeur seuil d'accès (S3, S2, S1, S0) reçus,
ou si l'autorisation d'accès au canal d'accès aléatoire, par exemple RACH, est à déterminer en fonction d'une interprétation du seuil d'accès,
et est conçue pour, comme interprétation du seuil d'accès, comparer le seuil d'accès (S) à un nombre aléatoire ou un nombre pseudo-aléatoire (R),
et est conçue pour accéder au canal d'accès aléatoire en fonction de la détermination à l'aide du bit de classe d'accès, soit indépendamment des bits de seuil d'accès (S3, S2, S1, S0) reçus, soit en fonction du résultat de la comparaison.
